# EUROPÄISCHE PATENTANMELDUNG

(11) **EP 1 314 955 A2**
(43) Veröffentlichungstag der Anmeldung: **28.05.2003**
(21) Anmeldenummer: 02024745.8
(22) Anmeldetag: 06.11.2002
(51) Int. Cl.: G01B 11/16

(54) **Verfahren zur Lagebestimmung von Messpunkten auf einem Objekt**

(30) Priorität: 16.11.2001 DE 10156431
(71) Anmelder: Ettemeyer AG, 89275 Elchingen (DE)
(72) Erfinder: Siebert, Thorsten, Dipl.-Phys., 76133 Karlsruhe (DE); Splitthof, Karsten, Dipl.-Phys., 89134 Blaustein (DE)
(74) Vertreter: Alber, Norbert, Dipl.-Ing.

(57) **Zusammenfassung**

Die Erfindung betrifft ein Verfahren zur Lagebestimmung von Meßpunkten auf einem Objekt hinsichtlich ihrer Verlagerung, die sie zwischen einem ersten und einem zweiten Zustand, meist dem unbelasteten Ausgangszustand und einem kraftbeaufschlagten Belastungszustand des Meßobjektes durchlaufen, in dem der Meßkopf mit seinem Meßbereich grob auf dem Prüfbereich der Oberfläche des Werkstücks positioniert wird, der Meßkopf die Oberfläche mittels eines optischen, flächenhaft arbeitenden, Meßverfahrens detektiert, die Lage wenigstens dreier Referenz-Meßpunkte im Meßbereich relativ zum Meßbereich bestimmt wird, die wenigstens drei Referenz-Meßpunkte des Meßbereichs des Meßkopfes hinsichtlich ihrer Lage relativ zum Prüfbereich und damit auf der Oberfläche des Werkstückes als Referenz-Objektpunkte bestimmt werden, für alle übrigen Meßpunkte des Meßbereichs mittels deren Relativlage zu den Referenz-Meßpunkten, deren Lage im Prüfbereich und damit auf der Oberfläche des Werkstückes als Objektpunkte bestimmt wird, und die Lage aller ermittelten Prüfpunkte des Prüfbereiches der Oberfläche des Werkstückes wenigstens flächig, z. B. mittels Farbabstufungen oder Gitterdarstellungen, optisch dargestellt wird.

## Beschreibung

### I. Anwendungsgebiet

Die Erfindung betrifft ein Verfahren zur Lagebestimmung von Meßpunkten auf einem Objekt. Mittels optischer, insbesondere flächenhaft arbeitender, Meßverfahren, wie etwa Speckle-Interferometrie oder auch der Grauwert-Korrelationsanalyse können mittels eines Meßkopfes eine Vielzahl von Meßpunkten, nämlich alle Meßpunkte, die innerhalb des Meßbereiches des Meßkopfes liegen, hinsichtlich ihrer Verlagerung, die sie zwischen einem ersten Zustand und einem zweiten Zustand, meist dem unbelasteten Ausgangszustand und einem kraftbeaufschlagten Belastungszustand des Meßobjektes durchlaufen. Mit einigen dieser Meßverfahren, beispielsweise der Speckle-Interferometrie, lassen sich neben der Verlagerung dieser Meßpunkte auch die Formgebung des gesamten Meßbereiches ermitteln.

### II. Technischer Hintergrund

Derartige Meßverfahren arbeiten jedoch in der Regel mit einem Meßkopf, dessen Meßbereich im Vergleich zur Größe des zu behandelnden Objektes relativ klein ist, beispielsweise nur einige Quadratzentimeter, während die Oberfläche des z.B. dreidimensionalen Objektes mehr als das 50-fache oder gar 100-fache betragen kann.

Selbstverständlich ist es möglich, mittels des Meßkopfes mehrere Meßbereiche zu detektieren. Da der Meßkopf und die mit ihm verbundene Auswerteeinheit, mit deren Hilfe die Verlagerungen der Meßpunkte des Meßbereiches optisch, also durch Farbverläufe, durch Gitterdarstellungen o. ä. einerseits oder durch ein Datenfeld andererseits dargestellt werden, diese Verlagerungen nur relativ zum Meßkopf darstellen, treten mehrere Probleme auf:
- Zum einen besteht keine exakte Zuordnung des Meßbereiches des Meßkopfes bezüglich des Meßobjektes, da die exakte Lage des Meßbereiches auf dessen Oberfläche nicht bekannt ist, und durch das Aufsetzen des Meßkopfes an einer bestimmten Stelle nur grob bedingt wird.
- Des weiteren kann der geometrische Zusammenhang mehrerer nebeneinanderliegender oder auch teilweise überlappender Meßbereiche nicht oder nur mit sehr großem Aufwand ermittelt werden. Dadurch können Aussagen über die Verlagerung von Meßpunkten über einen größeren Oberflächenbereich des Werkstückes als den Meßbereich des Meßkopfes.
- Darüber hinaus kann mit einem Meß-Schritt nur eine bestimmte maximale Verlagerung eines Meßpunktes von Ausgangszustand in den Meßzustand bestimmt werden. Größere Verlagerungen können allerdings mittels zusätzlicher Meßschritte ebenfalls bestimmt werden.

Gerade dann, wenn die Verlagerung eines Meßpunktes relativ groß ist, kann der Meßpunkt - vor allem, wenn er am Rande des Meßbereiches lag, - sich durch die Verlagerung auch aus dem Meßbereich herausbewegen. Insbesondere könnte also ein bestimmter Meßpunkt im Ausgangszustand einem ersten Meßbereich, im Meßzustand dagegen einem benachbart liegenden, zweiten Meßbereich zugeordnet sein.

Mittels des in der gleichen Position aufgesetzten Meßkopfes, also Detektierung ein und desselben Meßbereiches, könnte also die Verlagerung eines solchen Meßpunktes nicht detektiert werden.

### III. Darstellung der Erfindung

### a) Technische Aufgabe

Zur Lösung der vorstehenden Probleme besteht daher die Aufgabe der vorliegenden Erfindung darin, ein Meßverfahren zu schaffen, welches die Verlagerung von Meßpunkten zwischen einem Ausgangszustand und einem Meßzustand relativ zum Meßobjekt zu ermitteln gestattet, und insbesondere nicht nur für einen Meßbereich des Meßkopfes, sondern über einen größeren Teil der Oberfläche des Meßobjektes hinweg.

### b) Lösung der Aufgabe

Diese Aufgabe wird durch die Merkmale des Anspruches 1 gelöst. Vorteilhafte Ausführungsformen ergeben sich aus den Unteransprüchen.

Zunächst wird der Meßkopf grob an der gewünschten Stelle der Oberfläche des Werkstückes aufgesetzt, also im Normalfall der Ausgangszustand als auch der Meßzustand des Objektes abgetastet und durch Vergleich die Verlagerung der einzelnen Punkte des Meßbereiches, mittels des optischen, flächenhafthaft arbeitenden Meßverfahrens ermittelt. Dabei kommt es nicht darauf an, daß alle Punkte des Meßbereiches detektiert werden:

Mindestens drei, als Referenz-Meßpunkte dienende, Meßpunkte müssen in ihrer Lage relativ zu diesem Meßbereich bekannt sein, und auch in ihrer Lage relativ zum Werkstück, also zu dem zu überprüfenden Prüfbereich auf der Oberfläche des Werkstückes, definiert bekannt sein.

Die übrigen Meßpunkte innerhalb des Meßbereiches, die durch die Messung des Meßkopfes detektiert wurden, sind in ihrer Relativlage zu den Referenz-Meßpunkten bekannt, und können - unter Verwendung der Relativlage dieser Referenz-Meßpunkte auf dem Werkstück - hinsichtlich ihrer jeweiligen genauen Lage auf dem Werkstück berechnet werden. Dadurch ist auch die Darstellung der Lage aller bestimmten Prüfpunkte des Prüfbereiches, also auch über mehrere Meßbereiche hinweg, darstellbar, beispielsweise flächig darstellbar mittels optischer Wiedergabe durch Farbabstufungen oder Gitterdarstellungen.

In der Praxis wird die Bestimmung der Referenzpunkte durch sehr genaue Markierung dieser Referenz-Meßpunkte auf der Oberfläche des Werkstückes durchgeführt, wobei bei jedem Aufsetzen des Meßkopfes auf dem Werkstück im jeweiligen Meßbereich drei dieser Referenz-Meßpunkte liegen müssen.

Um die Anzahl der notwendigen Meßpunkte in Grenzen zu halten, kann beispielsweise versucht werden, den Meßkopf nacheinander so auf der Oberfläche des Werkstückes aufzusetzen, daß sich die jeweiligen Meßbereiche geringfügig überlappen, und in diesem Überlappungsbereich jeweils mindestens einer, eventuell sogar zwei, der wenigstens drei Referenz-Meßpunkte - die nicht auf einer Geraden liegen sollen - liegt. Dieser einer oder die zwei gemeinsamen Referenz-Meßpunkte können dann für zwei verschiedene Meßbereiche zur Lagebestimmung benutzt werden.

Die Lage der so angezeichneten Referenz-Meßpunkte kann relativ zum Werkstück mit Hilfe anderer Meßsysteme als des Meßkopfes bestimmt werden, insbesondere manuell oder mit einem Koordinaten-Meßgerät, in welches das Werkstück hineingestellt wird und mit dessen Hilfe alle Referenz-Meßpunkte relativ zum Werkstück vermessen werden.

Je nach dem für die vorstehende Erfindung eingesetzten optischen, flächenhaft eingesetzten Meßverfahren kann auch der Meßkopf selbst dann gegebenenfalls nicht durch nahe Positionierung am Werkstück, sondern entsprechend weit entfernte Positionierung, zur Bestimmung der Lage dieser Referenz-Meßpunkte relativ zum Werkstück selbst benutzt werden. In der Regel wird jedoch als Meßverfahren gemäß der Erfindung die Speckle-Interferometrie oder eine Korrelationsanalyse verwendet, die hierfür nicht geeignet sind. Z. B. arbeitet die Speckle-Interferometrie mit einer solchen Auflösung, daß eine Bestimmung der Position eines Referenz-Meßpunktes auf ca. ein Zehntel Millimeter genau möglich ist, während die Relativlage der Referenz-Meßpunkte auf der Oberfläche des Objekts etwas genauer bestimmt werden sollte.

Vorzugsweise ist auf der Seite des Meßsystems ein erstes Koordinatensystem, das Meßkopf-Koordinatensystem, etabliert, so daß die Lage der Referenz-Meßpunkte als auch der übrigen Meßpunkte relativ zum Meßbereich, also zum Meßkopf, in den Koordinaten dieses Meßkopf-Koordinatensystems ausgedrückt werden kann.

Vorzugsweise ist andererseits auf der Seite des Werkstückes ein Werkstück-Koordinatensystem etabliert, so daß die Lage von Punkten - auch der Referenz-Meßpunkte - bezüglich des Werkstückes in Koordinaten dieses Werkstück-Koordinatensystems ausgedrückt werden kann. Dadurch ist es für jeden einzelnen Meßbereich möglich, zunächst die Lage von dessen Meßpunkten, insbesondere dessen Referenz-Meßpunkten, in Koordinaten des Meßkopf-Meßsystems auszudrücken und andererseits - aufgrund Kenntnis der Lage der Referenz-Meßpunkte dieses Meßbereiches ausgedrückt in den Koordinaten des Werkstück-Koordinatensystems - die Lage des Nullpunktes des Meßkopf-Koordinatensystems im Werkstück-Koordinatensystem, also zum Nullpunkt des Werkstück-Koordinatensystems, auszudrücken.

Damit kann die Lage eines Meßpunktes im Werkstück-Koordinatensystem ausgedrückt werden, indem zu den Koordinaten dieses Meßpunktes, ausgedrückt in dem Meßkopf-Koordinatensystem, lediglich der Abstand zwischen den beiden Nullpunkten der Koordinatensysteme hinzugerechnet werden muß.

Damit ist mit relativ geringem Rechenaufwand die Umrechnung der Meßpunkte in die Lage relativ zum Werkstück möglich.

Angesichts der großen Anzahl von Meßpunkten innerhalb eines Prüfbereiches und der Verfielfachung mehrerer einander ergänzender Prüfbereiche auf einem Werkstück ist erst durch diese Vereinfachungsmaßnahmen die Bewältigung der Datenmenge und Rechenvorgänge durch einen üblichen PC möglich.

Besonders vorteilhaft ist dabei die Anwendung der Speckle-Interferometrie, wenn dies dazu benutzt wird, um nicht nur die Verlagerung von Meßpunkten auf der Oberfläche eines Objektes zwischen zwei Zuständen zu ermitteln, sondern zusätzlich auch - z. B. mittels des ersten Meßschrittes, in dem der Ausgangszustand detektiert wird, - die Form der Oberfläche im Prüfbereich ermittelt wird. Durch die Ergänzung der Prüfbereiche können dadurch große Teile der Oberfläche oder gar die gesamte Oberfläche des Werkstückes hinsichtlich seiner Formgebung ermittelt werden. Wenn zusätzlich die rechnerisch exakten Daten der Form der Oberfläche z. B. aufgrund der CAD-Daten vorliegen, können durch Abgleich der CAD-Daten mit den durch das flächenhafte Meßverfahren bestimmten Form-Daten Meßungenauigkeiten oder Meßfehler, die bei der Verlagerungs-Bestimmung mittels der Speckle-Interferometrie auftauchen, beseitigt werden.

Mit optischen Verfahren wie etwa dem Moirée-Verfahren können auch Verlagerungen in dieser dritten Dimension erkannt werden.

Auch andere optische Verfahren können eine Verlagerung in der dritten Dimension detektieren, beispielsweise die Korrelationsanalyse, insbesondere die Grauwert-Korrelationsanalyse, häufig auch bezeichnet als intensitätsbasierte Verschiebungsanalyse, digital image correlation bzw. digital image cross-correlation.

Allerdings ist dabei die absolute Verlagerung gegenüber dem Rest des Werkstükkes in der Regel nicht ermittelbar.

Gemäß der Erfindung wird jedoch der Prüfkopf auf den Meßbereich entweder aufgesetzt oder zumindest in einer ortsfesten Lage gegenüber dem Meßbereich fixiert.

Beim Aufsetzen auf den Meßbereich, also die Oberfläche des Werkstückes am Rande des Meßbereiches in zum Beispiel drei Punkten, verlagert sich selbstverständlich bei einer Dehnung des Werkstückes die gesamte Werkstückoberfläche bezüglich zum Beispiel der Mitte des Werkstückes und damit zu einem ortsfesten Punkt nach außen. Zusätzlich sind jedoch in der Folge auch Änderungen der Krümmung der Oberfläche im Meßbereich meßbar: Zum Beispiel entfernt sich der mittlere Bereich des Meßbereiches gegenüber der durch die drei Aufsetzpunkte des Prüfkopfes auf die Oberfläche gelegten theoretischen Ebene oder nähert sich ihr an, und diese Veränderung in der dritten, zur Oberfläche quer verlaufenden, Dimension ist durch flächenhafte optische Prüfverfahren, die in definierter Relation zur Oberfläche des Werkstückes eingesetzt werden, meßbar.

Wird als flächenhaftes optisches Meßverfahren die Speckle-Interferometrie eingesetzt, so ergibt sich daraus der zusätzliche Vorteil, daß - wie beispielsweise in der Europäischen Patentanmeldung 97 952 881 beschrieben - mittels dieses Verfahrens nicht nur die Verlagerung der Oberfläche zwischen einem Ausgangszustand und einem belasteten Zustand ermittelbar ist, sondern in einem unveränderten Werkstückzustand auch die Form der Oberfläche des Werkstückes im Meßbereich ermittelt werden kann.

Da der Computersimulation bei der Werkstückauslegung unter anderem die Form des Werkstückes zugrundegelegt wird, lassen sich über die Ermittlung der Form der Oberfläche in den Meßbereichen vor der Ermittlung der Verlagerung unter Belastung - durch Vergleich mit den der Computersimulation zugrundegelegten Formdaten des Werkstückes - die exakten Positionen der Meßbereiche relativ zum Werkstück ermitteln.

Dadurch ist es möglich, unter Verwendung mehrerer solcher Meßkopfhalterungen diese Meßkopfhalterungen vorab an den Meßbereichen des Werkstückes fest anzuordnen, und für die Durchführung der Belastungsmessungen nacheinander den Basis-Meßkopf auf die einzelnen Meßkopfhalterungen der Meßbereiche aufzusetzen und dann jeweils das Werkstück vom Ausgangszustand aus zu belasten und dabei die Verlagerung im Meßbereich zu messen.

Auf diese Art und Weise ist es möglich, unter geringem Zeitaufwand mit nur einem einzigen Meßkopf und damit mit geringer Grundausstattung ein Werkstück an mehreren Meßbereichen hinsichtlich der Verlagerung durch Belastung zu messen und damit die Simulationsberechnung gestützt auf viele Meßbereiche und sehr effizient zu optimieren.

### c) Ausführungsbeispiele

Eine Ausführungsform gemäß der Erfindung ist im folgenden anhand der Figuren beispielhaft näher beschrieben. Es zeigen:
- Fig. 1:: das zu untersuchende Werkstück 1,
- Fig. 1a:: eine Detaildarstellung aus Fig. 1 mit aufgesetztem Meßkopf,
- Fig. 1b:: eine Aussicht auf den Prüfbereich 2 der Fig. 1 in vergrößerter Darstellung,
- Fig. 2:: einen Schnitt durch die Fig. 1 bzw. 1a entlang der Linie II-II,
- Fig. 3:: grafische Darstellungen der Verlagerungen in den Meßbereichen aufgrund der Belastung des Werkstückes 1,
- Fig. 4:: eine Schnittdarstellung des Meßkopf-Halters bei bereits abgehobenem Meßkopf,
- Fig. 5:: eine Prinzipdarstellung der Speckle-Interferometrie.

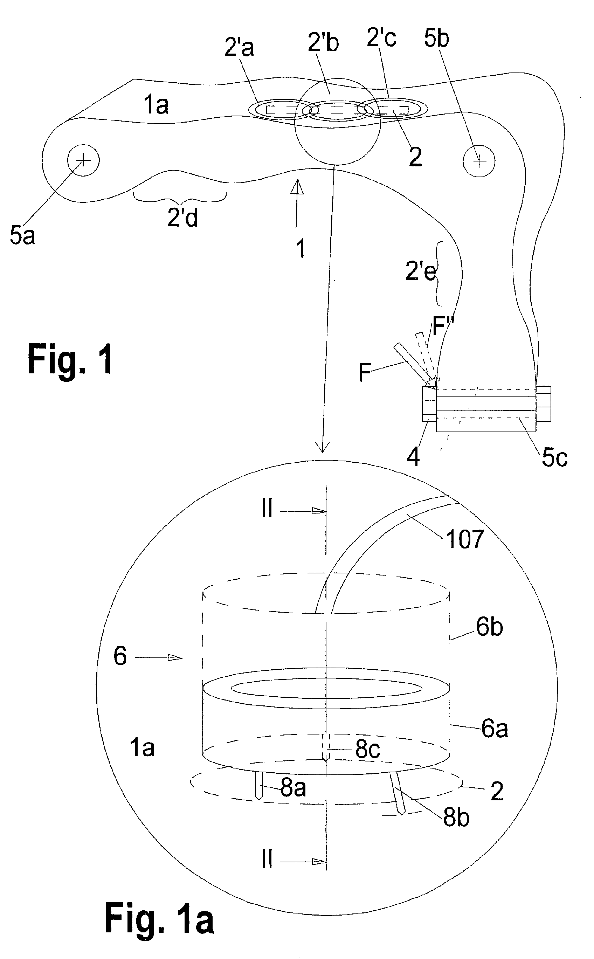

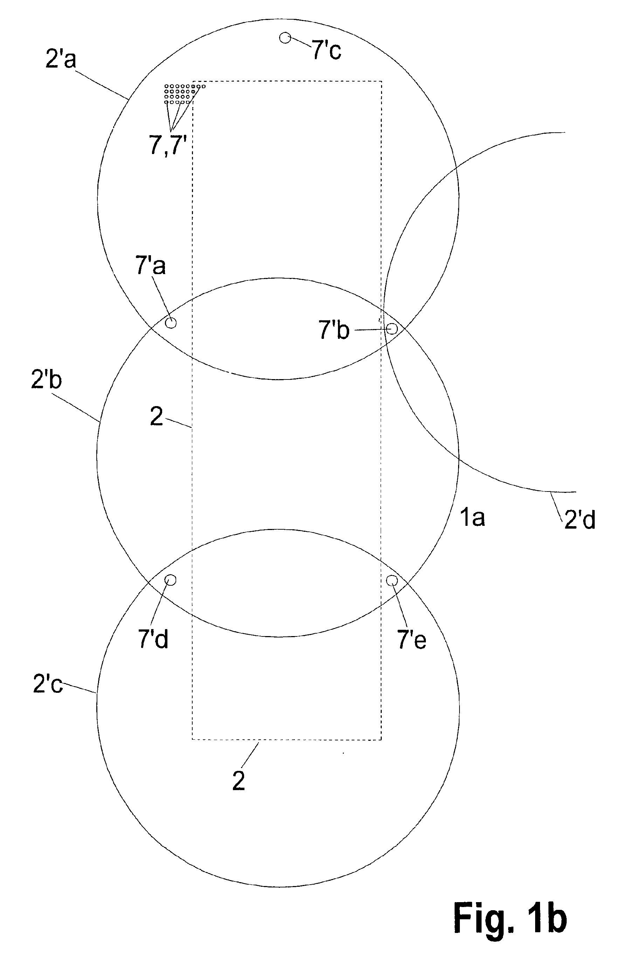

Fig. 1 zeigt ein im wesentlichen L-förmiges Bauteil 1, in diesem Fall mit drei zueinander beabstandeten Befestigungsbohrungen 5a, b, c, welches im Betrieb mittels einer durch die Bohrung 5c hindurchverlaufenden Verschraubung 4 durch eine Kraft F belastet sein soll.

Dabei soll vor allem untersucht werden, welche Verlagerung die Punkte auf der Oberfläche des Werkstückes 1, die Objektpunkte 7 im dort festgelegten Prüfbereich 2 erfahren.

Dies soll ermittelt werden mittels eines ein- oder mehrfach auf dem Objekt 1 aufzusetzendem Meßkopfes 6, wie in Fig. 1a dargestellt, der in der Lage ist, bei einem Aufsetzen eine Meßbereich 2' abzutasten, der eine runde Form besitzt analog der runden Außenkontur des Meßkopfes 6 in der Aufsicht.

Der Prüfbereich 2 ist dabei größer, insbesondere länger, als ein solcher Meßbereich 2', so daß der Prüfbereich 2 nur durch mehrere einander teilweise überlappende Prüfbereiche 2'a, b, c.., also durch mehrfaches Aufsetzen des Meßkopfes 6, detektiert werden kann. Zusätzlich sind an anderen Stellen der Oberfläche 1a des Werkstückes 1 Prüfbereiche vorgesehen, die jedoch kleiner als ein Meßbereich 2'd bzw. 2'e sind, so daß dort ein einmaliges Aufsetzen des Meßkopfes 6 genügt. Dort kommt es vor allem auf die genaue Zuordnung der hinsichtlich ihrer Verlagerung bei Belastung ermittelten Meßpunkte auf dem Werkstück 1 an.

Wie in Fig. 1a ersichtlich, besteht der Meßkopf 6 aus einem unteren Meßkopfhalter 6a, der etwa die Form eines Ringes hat und mit seiner Stirnseite etwa parallel zur Oberfläche 1a positioniert ist, indem von dieser unteren Stirnfläche z. B. drei Füße 8a, b, c nach unten vorstehen. Die Aufsetzpunkte der Füße 8a, b, c auf der Oberfläche 1a schließen zwischen sich den Meßbereich 2 ein, der auch größer als der Außenumfang des Meßkopfhalters 6a sein kann, wobei die Aufsetzpunkte der Füße 8a, b, c noch innerhalb oder auf dem Rand oder auch außerhalb des Randes des Meßbereiches 2 liegen können.

Auf der rückseitigen Stirnfläche des Meßkopfhalters 6a ist in definierter Position der eigentliche Meßkopf, der Basis-Meßkopf 6b aufsetzbar, der über ein Kabel 107 mit einer nicht dargestellten Auswerteeinheit verbunden ist.

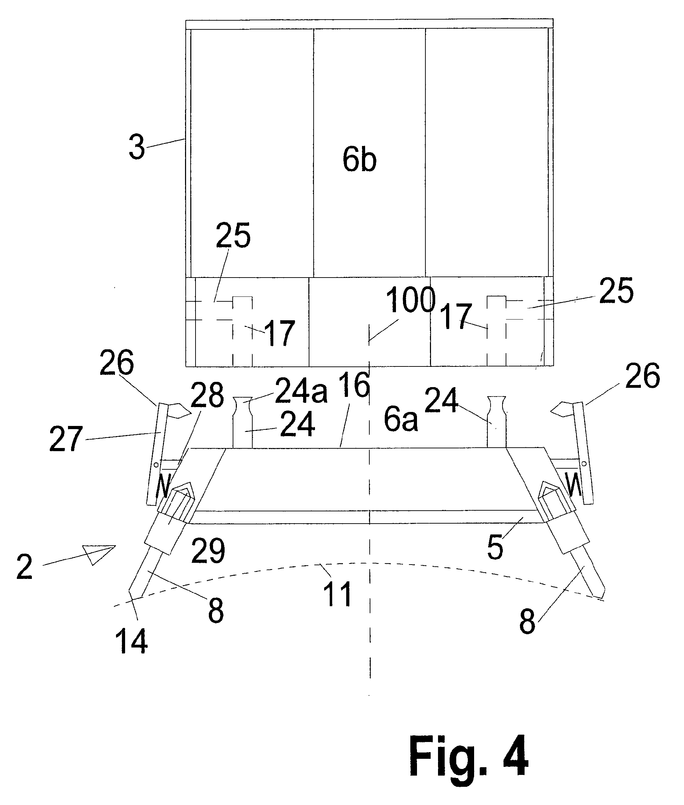

Fig. 4 zeigt in einer Schnittdarstellung - geschnitten entlang der Längsrichtung 100 - den Meßkopfhalter 6a und den darauf definiert und formschlüssig aufsetzbaren Basis-Meßkopf 6b.

In der vorderen Stirnfläche 25 des ringförmigen Meßkopfhalters 6a sind die Füße 8a, b, c gleichmäßig über den Umfang verteilt eingeschraubt, wobei es sich hier um drei solcher Füße handelt, jedoch auch vier Füße denkbar sind. Ist das Werkstück 1 aus einem magnetisierbaren Material, können die Füße 8a, b, c vorzugsweise als Permanentmagneten ausgebildet sein, da dann keine mechanische Befestigung auf der Oberfläche 1a notwendig ist, die in der Regel aus einem Spanngurt o. ä. besteht, welcher den Meßkopfhalter 6a auf der Oberfläche 1a festspannt. Von der hinteren Stirnfläche 16 ragen Paßstifte 24 vom Meßkopfhalter 6a ab, die in entsprechende Paßbohrungen 27 des Basis-Meßkopfes 6b passen, wenn dieser auf die rückwärtige Stirnfläche 16 des Meßkopfhalters 6a aufgesetzt wird.

Zusätzlich weist der Meßkopfhalter 6a eine Befestigung für den Basis-Meßkopf 6 auf, in diesem Fall in Form von Schwenkhebeln 27, die außerhalb des Umfanges des ringförmigen Meßkopfhalters 6a etwa parallel zu dessen Mantelflächen sich in Richtung der Mittelachse des Meßkopfhalters 6a in Längsrichtung 100 erstrecken und an ihrem hinteren, über die hintere Stirnfläche 16 hinausragenden, Ende nach innen weisende Fortsätze 26 aufweisen, die bei aufgesetztem Basis-Meßkopf 6b in dessen Mantelfläche in dort vorhandene Querbohrungen 25 einrasten. Damit diese Verbindung sich nicht selbständig löst, sind die Schwenkhebel 27 mittels Federn 29 in die einrastende Position der Fortsätze 26 vorgespannt.

Dadurch kann der Basis-Meßkopf 6b schnell und jederzeit exakt reproduzierbar auf einem bereits am Werkstück 1 fest angeordneten und positionierten Meßkopfhalter 6a aufgesetzt und befestigt werden zur Durchführung von Messungen. Auf diese Weise ist es möglich, nicht nur ein und denselben Meßkopfhalter 6a nacheinander über den gewünschten jeweiligen Meßbereichen 2', a, b, c.. zu befestigen, sondern sogar an jedem der Meßbereiche 2'a, b.. gleichzeitig einen der Meßkopfhalter 6b zu befestigen und dort zu belassen für die Dauer der Messungen. Um die Meßbereiche 2'a, b.. nacheinander zu detektieren, muß nur der Basis-Meßkopf 6b nacheinander auf die positionierten und fixierten verschiedenen Meßkopfhalterungen aufgesetzt werden.

So zeigt beispielsweise die Fig. 1b in vergrößerter Detaildarstellung, daß ein Prüfbereich 2 auf der Oberfläche 1a des Werkstückes 1 detektiert werden soll, der größer ist als ein einzelner Prüfbereich 2'. Aus diesem Grund werden einander geringfügig überlappende Prüfbereiche 2'a, b, c so angeordnet, daß sie den gesamten Prüfbereich 2 insgesamt abdecken. Vorzugsweise werden auf die Prüfbereiche 2'a, b, c die Meßkopfhalter 6a nacheinander aufgesetzt und befestigt, was trotz der Überlappung der Meßbereiche 2'a, b, c dann möglich ist, wenn diese Meßbereiche größer sind als der Außenumfang der jeweiligen Meßkopfhalter.

Um die räumliche Zuordnung der einzelnen Meßbereiche 2'a, b, c zu dem Objekt 1 zu ermöglichen, sind im oder in der Nähe des Prüfbereiches 2 Referenz-Meßpunkte 7'a, b, c.. auf der Oberfläche 1a sehr genau angezeichnet und zwar so, daß in jedem der einzelnen Prüfbereiche 2'a, b, c.. jeweils mindestens drei solcher Referenz-Meßpunkte liegen.

Gemäß Fig. 1 ist beim Meßbereich 2'a beispielhaft von drei solcher Referenz-Meßpunkte 7'a-c ausgegangen, die gleichmäßig über den Umfang verteilt dort nahe des äußeren Randes des kreisförmigen Prüfbereiches 2'a liegen, und jedenfalls nicht auf einer Linie liegen dürfen.

Am Beispiel des Meßbereiches 2'b ist dargestellt, daß auch mehr Referenz-Meßpunkte, in diesem Fall vier Referenz-Meßpunkte 7'a, b, d, e in einem Meßbereich 2'b liegen.

Dabei sind die Referenz-Meßpunkte so gelegt, daß sie im Überlappungsbereich wenigstens zweier benachbarter Meßbereiche 2'a und 2'b liegen und damit von zwei Meßbereichen gemeinsam genutzt werden können, oder auch von mehr benachbart liegenden Meßbereichen, wie am Beispiel des Referenz-Meßpunktes 7'b dargestellt.

Vorzugsweise wird dann - im unbelasteten Zustand, dem Ausgangszustand des Werkstückes 1, der Basis-Meßkopf 6b nacheinander auf die Meßkopfhalterungen 6a der Meßbereiche 2'a, b, c.. aufgesetzt und jeweils eine erste Messung durchgeführt.

Anschließend wird unter Einbringen einer definierten Belastung, beispielweise durch Angreifen der Kraft F am dargestellten Einleitungspunkt und in der dargestellten Einleitungsrichtung die in den einzelnen Meßbereichen 2'a, b, c stattfindende Verlagerung der Meßpunkte 7', die innerhalb dieses Meßbereiches z. B. 2' liegen, mittels z. B. der Speckle-Interferometrie ermittelt.

Abhängig von der Auflösung des dabei im Basis-Meßkopf 6b verwendeten optischen Elementes, in der Regel CCD-Sensors, handelt es'sich bei einem einige Quadratzentimeter großen Prüfbereich 2' um mehrere zehntausend Meßpunkte 7'. Zusätzlich erlauben es einige der hierbei anwendbaren flächenhaften optischen Meßverfahren - beispielsweise die Speckle-Interferometrie- dabei aufgrund spezieller Ausgestaltungen im Rahmen einer Messung, z. B. der ersten Messung des Ausgangszustandes, auch die dreidimensionale Gestaltung der Oberfläche in diesem jeweiligen Meßbereich, z. B. 2'a, zu ermitteln.

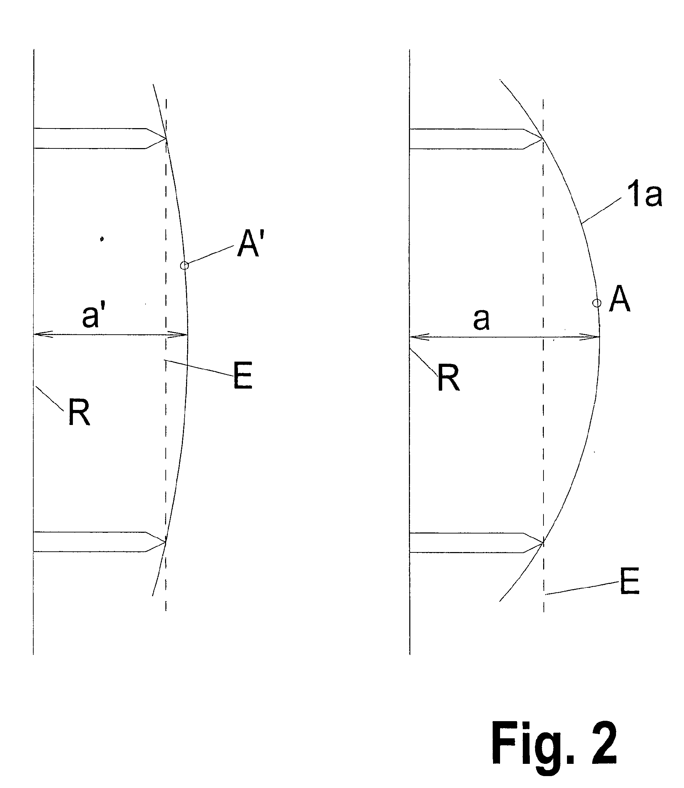

Die Schnittdarstellung der Fig. 2 zeigt, warum es vorteilhaft ist, mit einem optischen Verfahren zu arbeiten, welches in der Lage ist, auch dreidimensionale Lageveränderungen von Punkten der Oberfläche 1a des Werkstückes 1 zu ermitteln:

Mit zweidimensionalen Meßverfahren wäre es nur möglich, eine Verlagerung eines Meßpunktes A entlang der Oberfläche 1a des Werkstückes in die Position A' zu bestimmen, wenn das Werkstück 1 vom unbelasteten in den belasteten Zustand übergeht. Zusätzlich kann sich dabei jedoch auch der Abstand a dieses Meßpunktes zur Bezugsebene E oder in einer hierzu parallelen Referenzebene R, etwa die durch die Aufsetzpunkte des Meßkopfes auf der Oberfläche 1a definiert ist, auf einen Wert a' ändern, beispielsweise durch Veränderung der Krümmung der Oberfläche 1a, wenn sich beispielsweise das Werkstück 1 wie im vorliegenden Fall stärker durchbiegt.

Eine Dehnung oder Stauchung der Oberfläche 1a entlang der Oberfläche führt ferner dazu, daß sich auch die Abstände der Aufsetzpunkte der Füße 8a, b, c zueinander verändern. Dies kann ausgeglichen werden entweder durch federnde Beine 8a, b, c, die hierdurch gleichmäßig gebogen werden, oder indem einer der Füße, zum Beispiel 8a, fest auf der Oberfläche 1a befestigt ist, die anderen Füße demgegenüber ihre Position verändern können, was jedoch prekär hinsichtlich einer Drehung um diesen fixen Fuß 8a ist.

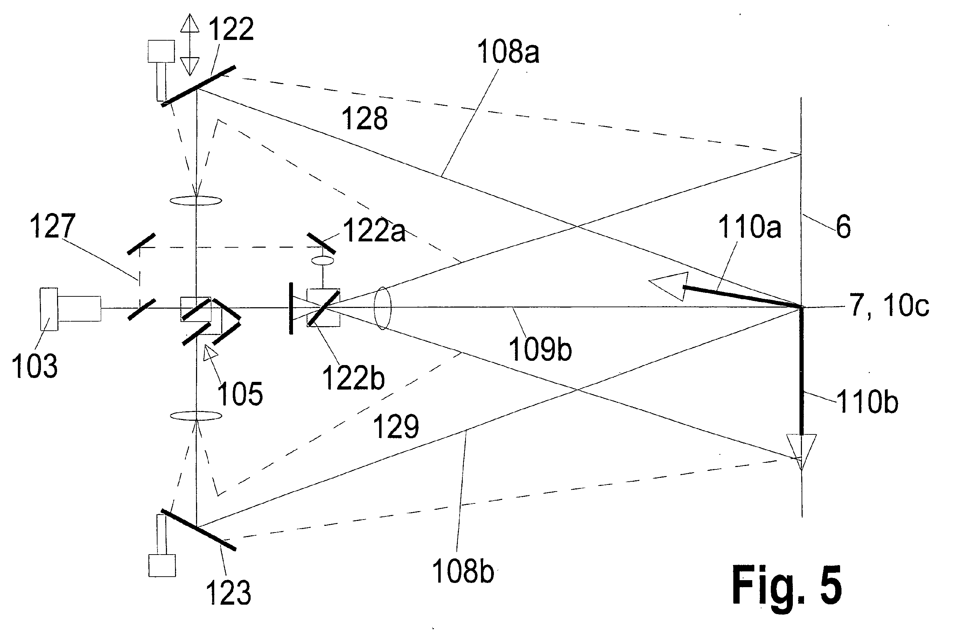

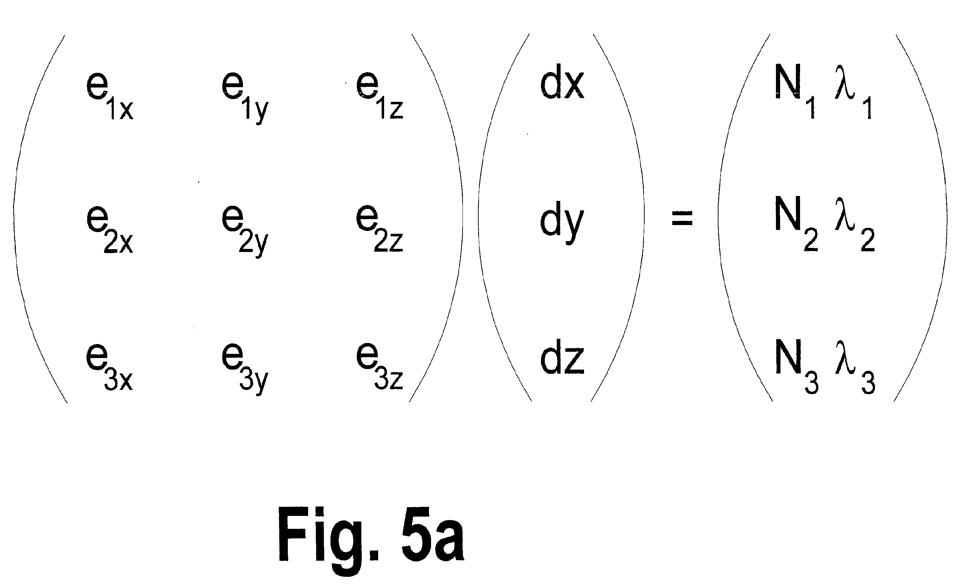

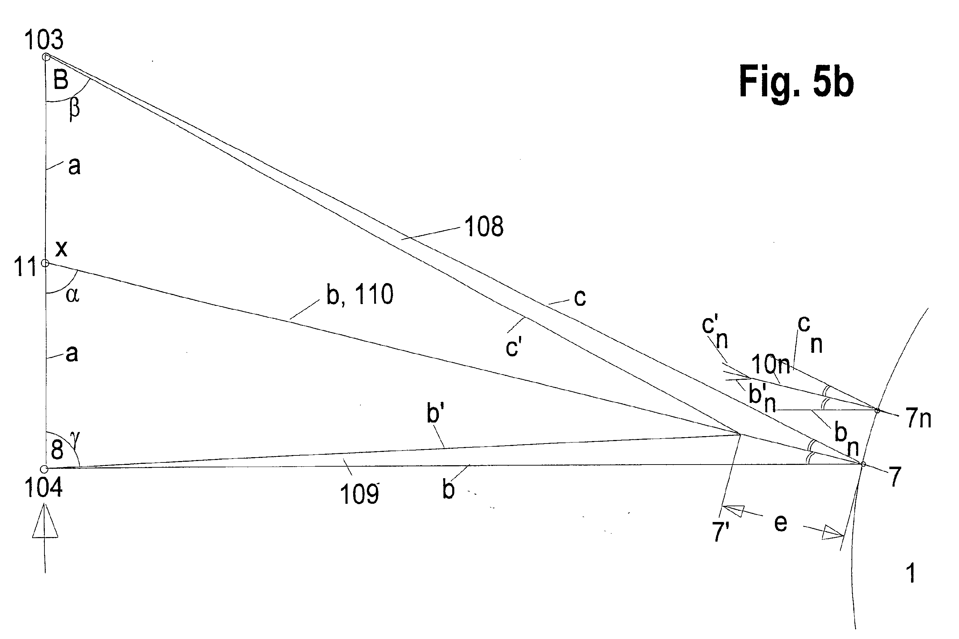

Die Ermittlung der Verlagerung eines Meßpunktes A - der innerhalb des Prüfbereiches zum Beispiel 2b frei definiert werden kann und von dem bis zum 1000 Stück verteilt über den Prüfbereich definiert werden können - zeigt Fig. 5.

Fig. 5 dabei zeigt eine Einrichtung, bei der durch zwei aus unterschiedlichen Beleuchtungsrichtungen 108a, 108b erfolgende Beleuchtungen eine Verlagerung der einzelnen Meßpunkt, zum Beispiel A, in einer Meßrichtung 110b quer zur Beobachtungsrichtung 109b, mithin also in der Regel in Richtung der Objektoberfläche 1a, ermittelt. Die Beobachtungsrichtung 109b ist dabei in der Regel die Winkelhalbierende zwischen den beiden Beleuchtungsrichtungen 108a und 108b.

Andererseits wird die Verlagerung des gleichen Meßpunktes A in einer Meßrichtung 110a ermittelt, die zur Meßrichtung 110b im Winkel steht und die Winkelhalbierende zwischen einer der Beleuchtungsrichtungen, zum Beispiel 108a, unter Beobachtungsrichtung 109a = 109b darstellt.

Die hierfür notwendige Referenzwelle 127 wird - zusätzlich zum Strahlteiler 105 - aus dem Lauf der Lichtstrahlen zwischen dem Laser 103 und dem Strahlteiler 105 vorzugsweise vor dem Strahlteiler 105 mittels eines halbdurchlässigen Spiegels 121 abgezweigt und mittels weiterer Spiegel 122a,b wieder direkt und ohne Objektberührung auf die Kamera 104 geleitet. Der Strahlteiler 105 hat die Aufgabe, den vom Laser 103 kommenden, vorzugsweise in Beobachtungsrichtung 109a = 109b verlaufenden Strahl mittels wenigstens eines halbdurchlässigen Spiegels aufzuteilen, und die beiden Teilstrahlen durch Umlenkung um jeweils unterschiedliche 90°-Beträge in entgegengesetzte Richtungen zur Seite umzulenken auf dort angebrachte, wiederum gesteuert verschwenkbare Spiegel 122, 123, deren Schwenkachsen quer zur Zeichenebene der Fig. 5 und damit lotrecht zu der durch die Beleuchtungsrichtungen 108a,b aufgespannten Ebene beweglich sind. Die Spiegel 122, 123 leiten wiederum die Strahlen in den zueinander im in der Regel spitzen Winkel stehenden Beleuchtungsrichtungen 108a,b auf den Meßpunkt A weiter. Im Strahlengang zwischen dem Strahlteiler 105 und den beweglichen Spiegeln 122, 123 ist in der Regel noch eine Streulinse angeordnet.

Wenn zusätzlich die duale Beleuchtung doppelt vorhanden ist, also nicht nur in Form der Beleuchtungsrichtungen 108a und 108b, die in der Zeichenebene der Fig. 5 liegen, sondern durch weitere, nicht dargestellte Beleuchtungsrichtungen 108c und 108d, die eine zweite Beleuchtungsebene aufspannen, welche im rechten Winkel zur Zeichenebene der Fig. 5 liegt und mit dieser die Beobachtungsrichtung 109a = 109b = 109c = 109d gemeinsam hat, ergibt sich neben der in Fig. 5 eingezeichneten Meßrichtung 110b eine weitere Meßrichtung 110c, die ebenfalls lotrecht zur Beobachtungsrichtung 109 und damit vorzugsweise in der Ebene der Objektoberfläche liegt, jedoch im Winkel, insbesondere rechtwinklig, zur Meßrichtung 110b.

Damit ist die Verlagerung des Meßpunktes A des Ausgangszustandes in den Objektpunkt 7' des Meßzustandes in drei voneinander unterschiedlichen Meßrichtungen 110a,b,c bekannt, wobei es egal ist, ob die Verlagerungen in die drei unterschiedlichen Meßrichtungen 110a,b,c durch ein- und dieselbe Meßvorrichtung der durch getrennte Meßvorrichtungen oder gar Meßverfahren ermittelt wird.

Daraus läßt sich ein Gleichungssystem gemäß Fig. 5a erstellen, wobei die Komponenten e₁ₓ , e_{1y}, e_{1z,}, die Verlagerungskomponenten des Meßpunktes A in der ersten Meßrichtung 110a sind und N1 den Betrag dieser Verlagerung in Meßrichtung 110a, angegeben in der dabei verwendeten Wellenlänge λ1, ist. Analoges gilt für die zweite und dritte Zeile des Gleichungssystems für die weiteren Meßrichtungen 110b und 110c.

Werden Messungen in mehr als drei verschiedenen Meßrichtungen durchgeführt, ist das Gleichungssystem überbestimmt. In der Praxis dienen jedoch die vierte und jede weitere Meßrichtung der Verringerung des Einflusses von Falschmessungen, Signalrauschen etc. und der Verbesserung des Meßergebnisses. In der Regel wird die bei den Ermittlungen der Verlagerungen in den drei Meßrichtungen 110a,b,c verwendete Wellenlänge die gleiche sein, so daß λ1 = λ2 = λ3 zu setzen ist, aber zumindest sind λ1, λ2 und λ3 bekannt.

Nach den bekannten Regeln zur Lösung eines Gleichungssystems aus drei Gleichungen mit drei Unbekannten lassen sich damit die Faktoren dx, dy, dz ermitteln, welches die Komponenten in den drei aufeinander senkrecht stehenden Raumrichtungen x, y und z sind, um welche sich der Meßpunkt A aus dem Ausgangszustand in einen Objektpunkt A' im Meßzustand, also im belasteten Zustand des Meßobjektes, verlagert. Damit ist die relative Verlagerung des Objektpunktes in Raumkoordinaten bekannt.

Die gleiche Aussage kann für eine Vielzahl von innerhalb des Prüfbereiches, zum Beispiel 2b vorhandenen und zu definierenden Meßpunkte gleichzeitig erfolgen.

Dabei ist zu bedenken, daß alle vorstehenden Überlegungen darauf basiert haben, daß die Verlagerung eines Meßpunktes zwischen dem Ausgangszustand und dem Meßzustand in Meßrichtung kleiner als etwa die Hälfte der Wellenlänge des verwendeten Lichts sein soll. Wäre dies nicht sichergestellt, könnte es sein, daß sich die Laufwegslänge des Lichts zwischen Ausgangszustand und Meßzustand nicht nur um den gemessenen Differenzwert δ, sondern zusätzlich um ein ganzzahliges Vielfaches der Wellenlängen λ unterschieden hätten. Ist der Vektor e, der im folgenden anhand der Fig. 5b erläutert wird, größer als λ/2, läßt sich die Verlagerung dann dennoch ermitteln, wenn für wenigstens einen Meßpunkt im Meßfenster der gesamte Verlagerungsvektor vom Ausgangszustand in den Meßzustand bekannt ist, indem dieser Punkt A dann als Vergleichspunkt für Nachbarpunkte dient und diese wiederum für ihre Nachbarpunkte usw.

Um vor einer Kraftbeaufschlagung des Werkstückes 1 im Ausgangszustand die Form, also die dreidimensionale Formgebung, der Oberfläche 1a des Werkstükkes 1 in den einzelnen Meßbereichen 2a, b, c zu ermitteln, wird vorgegangen, wie anhand Fig. 5b erläutert:

Der Grundgedanke besteht dabei wiederum darin, durch Veränderung der Laufweglänge des Lichtstrahles von dem Laser 103 bis zum Auftreffen auf dem Meßpunkt A einen Differenzwert δ zu ermitteln, wie bei Speckle-Interferometrie üblich.

Während dort der Differenzwert δ jedoch dazu dient, die Verlagerung des Meßpunkte A vom Ausgangszustand in den Meßzustand zu ermitteln, kann diese Verlagerungsstrecke A-A' zwischen Ausgangszustand und Meßzustand gerade als bekannt vorausgesetzt werden, da durch entsprechende Veränderung der Weglänge einer der Objektwellen, beispielsweise durch Verlagerung eines der Umlenkspiegel im Strahlengang zwischen Laser und Meßpunkt, und/oder gezielter Veränderung des Abstandes des Meßkopfes 6 zum Objekt, diese Verlagerung e gerade bekannt ist.

Die Länge der Dreieckseite a als halber Abstand zwischen dem Laser 103 und der Kamera 104, der Winkel α am Auftreffpunkt der Beobachtungsrichtung 109 als Winkelhalbierende ist genau in der Mitte zwischen dem Laser 103 und der Kamera 104 und - aufgrund gezielter Veränderung auf seiten der Meßeinheit beziehungsweise im Strahlengang der Objektwellen - ist die Verlagerung e in Meßrichtung 109, also entlang der Dreiecksseite b.

Die als bekannt vorgegebene Verlagerung e ergibt wiederum im Gleichungssystem gemäß Fig. 5a einen jeweiligen Differenzwert δ, um den die vom Objekt reflektierte Welle versetzt gegenüber einem Referenzstrahl auf dementsprechenden Kamerapunkt auftrifft, und damit den Faktor d im Gleichungssystem der Fig. 5a.

Für einen vom Meßpunkt 7 benachbarten Objektpunkt 7n stellt man fest, daß die Verlagerung der Meßeinheit um einen bestimmten Betrag in Meßrichtung 110 nicht bei allen Meßpunkten 7, 7n usw. des Prüfbereiches 2 die gleiche, sondern jeweils leicht voneinander unterschiedliche, Veränderungen des Laufweges der Objektwelle bewirkt.

Dies ist nachvollziehbar, wenn man anhand der Fig. 5b erkennt, daß die Meßrichtung 110a, die beispielsweise die Verbindung des in der Mitte des Prüfbereiches 2 gelegenen Meßpunktes 7 mit der Mitte der Meßeinheit, also der Winkelhalbierenden, zwischen Beleuchtungsrichtung 108 und Beobachtungsrichtung 109, ist, und die Mitte zwischen Laser 103 und Kamera 104 am Fußpunkt 11 trifft.

Die Verlagerung e ergibt für den Meßpunkt 7 den Differenzwert δ. Für einen benachbarten Meßpunkt 7n ist die Meßrichtung 110n, in der die Verlagerung um den Betrag E erfolgte, nicht mehr exakt die Winkelhalbierende zwischen Beleuchtungsrichtung 108 und Beobachtungsrichtung 109. Folglich bewirkt die Verlagerung in Beobachtungsrichtung 10a um den Betrag e einen Differenzwert δₙ = δ₊ₙ, also einen vom Differenzwert δ des Meßpunktes 7 um n unterschiedlichen Differenzwert. Dieser Unterschiedsbetrag n repräsentiert jedoch - bezüglich der Meßrichtung 110 - den Unterschied in der Entfernung der Meßpunkte 7 und 7n zur Meßeinheit.

Durch massenhafte Bestimmung dieser Unterschiede werden die Unterschiede in den Abständen - insbesondere gesehen in Meßrichtung 110a - der einzelnen Meßpunkte 7..., 7n... des Prüfbereiches 2 zur Meßeinheit, jedoch jeweils nur in Meßrichtung 110a, ermittelt. Damit ist die dreidimensionale Form der Oberfläche 1a im Meßbereich 2 bestimmt. Indem zwei oder vorzugsweise sogar drei solcher Messungen aus unterschiedlichen Meßrichtungen durchgeführt werden, läßt sich die Relation jeweils benachbarter Meßpunkte 7, .., 7n in den drei Raumrichtungen verfeinern.

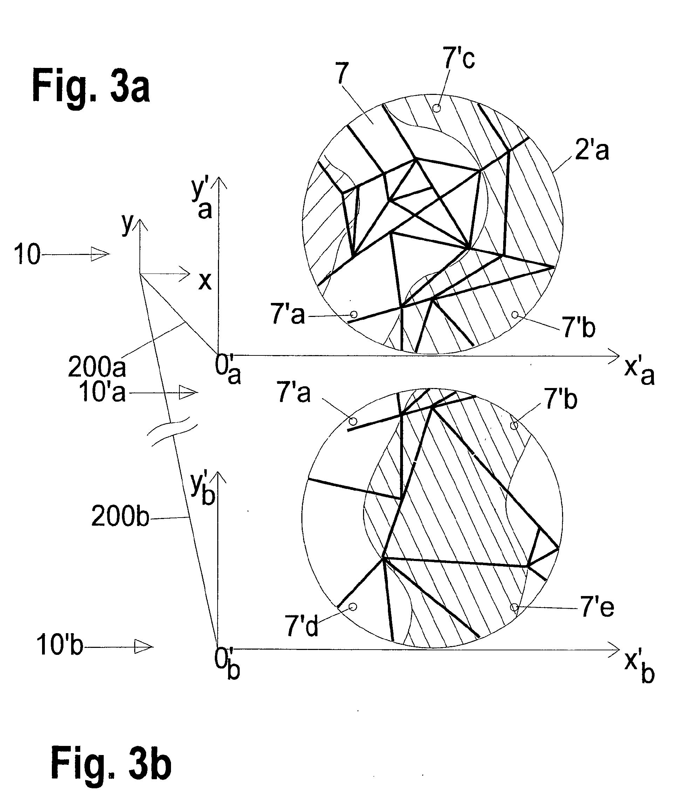

Fig. 3a und 3b zeigen die grafische Art der Darstellung der Verlagerung von Oberflächenpunkten im Meßbereich 2' bzw. 2'b, mit welchen die Vielzahl der einzelnen Meßpunkte, die über den ganzen Meßbereich 2' verteilt sind, dargestellt werden soll. Natürlich ist auch eine mathematische Darstellung in Form eines Datenfeldes möglich.

Bei der grafischen Darstellung wird entweder nach Finite-Elemente-Methode ein Liniengitter 9 über dem Prüfbereich 2'a oder b erzeugt und/oder aneinandergrenzende Bereiche unterschiedlicher Farbe - in den Figuren 3a und 3b dargestellt durch unterschiedliche oder fehlende Schraffur - wobei die Farben auch ineinander übergehen können. Gleiche Farbe bedeutet dabei gleichstarke Verlagerung der darin befindlichen Meßpunkte, also Verlagerung um den gleichen Betrag und/oder in die gleiche Richtung.

Das erfindungsgemäß zu lösende Problem besteht nun darin, daß - wie in den Fig. 3a und 3b dargestellt - die Lage der einzelnen Meßpunkte 7', und dabei insbesondere die Lge der Referenzpunkte 7'a, b.. nur bezüglich des jeweiligen Meßbereiches 2', also bezüglich eines Meßkopf-seitigen Koordinatensystems 10'a bzw. 10'b exakt bekannt ist, somit also ausgedrückt in deren Koordinaten X'a, Y'a bzw. X'b, Y'b. Damit kann die exakte Lage dieser Meßpunkte auf dem Objekt nicht bestimmt werden, und insbesondere nicht flächenhaft, also für alle Meßpunkte dieser Fläche, die Verlagerungen innerhalb des Prüfbereiches 2 gemäß Fig. 1b dargestellt werden.

Erfindungsgemäß werden deshalb zunächst alle Referenz-Meßpunkte 7'a, b, c.., deren Relativlage zum Meßkopf-seitigen Koordinatensystem 10' bei jeder Messung ermittelt wird, auch in ihrer Lage bezüglich des Werkstückes 1, also ausgedrückt in einem Werkstück-Koordinatensystem 10 vermessen, in der Regel mittels einer zusätzlich vorhandenen Meßvorrichtung.

Daraus wird die Relativlage jedes der Meßkopf-Koordinatensysteme 10'a, b.. zu dem Werkstück-Koordinatensystem 10 ermittelt, insbesondere durch Ermittlung des jeweiligen Abstandes 200a, b.. deren Nullpunkte 0'a, b zum Nullpunkt 0 des Werkstück-Koordinatensystems 10.

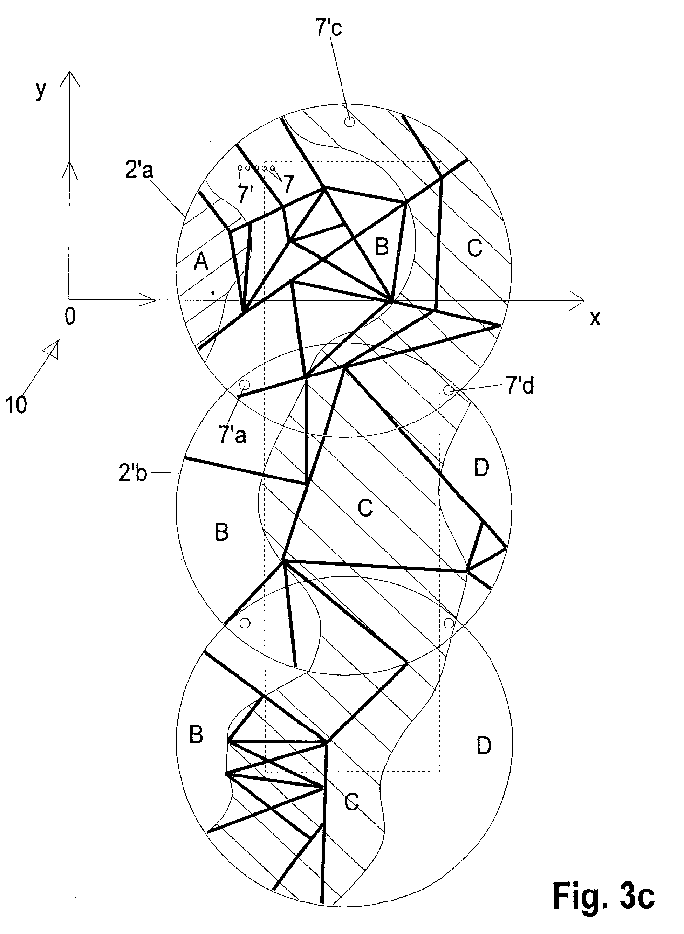

Durch Hinzurechnen dieser Abstände 200a, b können auch für die große Anzahl von Meßpunkten 7 aller Meßbereiche 2'a, b, c, deren Koordinaten umgerechnet und somit in Form von Koordinaten X, Y des Werkstück-Koordinatensystems 10 werden. Damit ist eine über mehrere Prüfbereiche 2'a, b durchgehende grafische Darstellung des gesamten Prüfbereiches 2, insbesondere der in diesem Prüfbereich auftretenden Verlagerungen, möglich, ohne sich dabei lediglich auf die optische Deckung der übereinstimmenden Referenz-Meßpunkte 7'a, 7'b verlassen zu müssen, die zwei benachbarten Prüfbereichen 2'a, b gemeinsam angehören. Eine solche durchgängige Darstellung von Verlagerung von Meßpunkten 7', die ja gleichzeitig Objektpunkte 7 auf der Oberfläche 1a sind, ist in Fig. 3c über die drei einander teilweise überlappenden Meßbereiche 2'a, b, c gemäß Fig. 1b dargestellt:

Dabei gehen die Begrenzungslinien der Bereiche bzw. die Liniengitter 9 ohne Abbruch über die Grenzen zwischen den Meßbereichen 2'a, b usw. hinweg, und alle Meßpunkte 7' sind durchgängig durch Koordinaten des gleichen Koordinatensystems, nämlich des Werkstück-Koordinatensystems 10, wiedergegeben und abgespeichert.

Dadurch können auftretende Verlagerungen und - hieraus geschlossene auftretende Spannungen - räumlich sehr exakt bestimmt werden und damit auch eine Werkstückoptimierung sehr genau durchgeführt werden. Zusätzlich können dadurch auftretende Fehler bzw. Bestimmungslücken hinsichtlich der auftretenden Verlagerungen und daraus rückgeschlossenen Spannungen auf der WerkstückOberfläche, wie sie bei der Ermittlung durch optisch flächenhaft arbeitende Meßverfahren auftreten, überbrückt bzw. gemindert werden.

### BEZUGSZEICHENLISTE

- 1: Werkstück
- 1a: Oberfläche
- 2: Prüfbereich
- 2': Meßbereich
- 6: Meßkopf
- 6a: Meßkopf-Halter
- 6b: Basis-Meßkopf
- 7: Objektpunkt
- 7': Meßpunkt
- 8: Fuß
- 9: Liniengitter
- 10: Werkstück-Koordinatensystem
- 10': Meßkopf-Koordinatensystem
- 11: Fußpunkt
- 14: Spitze
- 16: Stirnfläche
- 17: Paßbohrung
- 24: Passstift
- 25: Querbohrung
- 26: Fortsatz
- 27: Schwenkhebel
- 29: Feder
- 100: Längsrichtung
- 103: Laser
- 104: Kamera
- 105: Strahlteiler
- 107: Kabel
- 108: Beleuchtungs-Richtung
- 109: Beobachtungs-Richtung
- 110: Meß-Richtung
- 121, 122: Spiegel
- 123: Spiegel
- 127: Referenzwelle
- 200a,b: Abstand
- a: Abstand
- b: Dreieckseite
- E: Bezugsebene
- A, A': Meßpunkt-Position
- e: Verlagerung

## Patentansprüche

1. Verfahren zur Bestimmung der Lage aller Meßpunkte (7') wenigstens eines Meßbereichs (2') eines einen Prüfbereich einer Oberfläche (1a) eines Werkstükkes (1) detektierenden Meßkopfes (6) relativ zum Werkstück (1), in dem
a) der Meßkopf (6) mit seinem Meßbereich (2') grob auf dem Prüfbereich (2) der Oberfläche (1a) des Werkstücks (1) positioniert wird,
b) der Meßkopf (6) die Oberfläche (1a) mittels eines optischen, flächenhaft arbeitenden, Meßverfahrens detektiert,
c) die Lage wenigstens dreier Referenz-Meßpunkte (7'a,b,c) im Meßbereich (2') relativ zum Meßbereich (2') bestimmt wird,
d) die wenigstens drei Referenz-Meßpunkte (7'a, b, c) des Meßbereichs (2') des Meßkopfes (6) hinsichtlich ihrer Lage relativ zum Prüfbereich (2) und damit auf der Oberfläche (1a) des Werkstückes (1) als Referenz-Objektpunkte (7a, b, c) bestimmt werden,
e) für alle übrigen Meßpunkte (7') des Meßbereichs (2') mittels deren Relativlage zu den Referenz-Meßpunkten (7'a, b, c), deren Lage im Prüfbereich (2) und damit auf der Oberfläche (1a) des Werkstückes (1) als Objektpunkte (7) bestimmt wird, und
f) die Lage aller ermittelten Prüfpunkte (7) des Prüfbereiches (2) der Oberfläche (1a) des Werkstückes (1) wenigstens flächig, z. B. mittels Farbabstufungen oder Gitterdarstellungen, optisch dargestellt wird.

2. Verfahren nach Anspruch 1,
**dadurch gekennzeichnet, daß**
das optische, flächenhaft arbeitende Meßverfahren die Speckle-Interferometrie ist.

3. Verfahren nach Anspruch 1,
**dadurch gekennzeichnet, daß**
das optische, flächenhaft arbeitende Meßverfahren eine Korrelationsanalyse, insbesondere eine Verschiebungsanalyse, insbesondere die Grauwert-Korrelationsanalyse oder die intensitätbasierte Verschiebungsanalyse ist.

4. Verfahren nach einem der vorhergehenden Ansprüche,
**dadurch gekennzeichnet, daß**
die Relativlage der Referenz-Meßpunkte (7'a, b, c) sowie der übrigen Meßpunkte (7') zum Meßbereich (2') in Koordinaten eines Meßkopf-Koordinatensystems (10') ausgedrückt wird.

5. Verfahren nach einem der vorhergehenden Ansprüche,
**dadurch gekennzeichnet, daß**
die Relativlage der bestimmten Prüfpunkte (7) des Prüfbereiches (2) durch Koordinaten eines Werkstück-Koordinatensystems (10) ausgedrückt wird.

6. Verfahren nach einem der vorhergehenden Ansprüche,
**dadurch gekennzeichnet, daß**
die Relativlage der bestimmten Objektpunkte (7) zum Werkstück (1) bestimmt wird durch Addierung der Relativlage des Nullpunktes des Meßkopf-Koordinatensystems (10') zum Nullpunkt des Werkstück-Koordinatensystems (10) zu der Relativlage der Meßpunkte (7') bezüglich des Meßbereichs (2').

7. Verfahren nach einem der vorhergehenden Ansprüche,
**dadurch gekennzeichnet, daß**
mehrere, insbesondere einander ergänzende oder teilweise überlappende, Meßbereiche (2'a, b,...) nacheinander dem Verfahren gemäß Anspruch (1) unterworfen werden und dadurch ein Prüfbereich (2) durchgängig flächig optisch dargestellt werden kann, der wesentlich größer ist als die Größe des Meßbereiches (2'), insbesondere die gesamte Oberfläche (1a) des Werkstückes (1) ist.

8. Verfahren nach einem der vorhergehenden Ansprüche,
**dadurch gekennzeichnet, daß**
das Verfahren gemäß einem der vorhergehenden Ansprüche für zwei unterschiedliche Belastungszustände des Werkstückes (1) durchgeführt wird und die dabei auftretenden Verlagerungen von Objektpunkten (7) im Werkstück-Koordinatensystem (10) darstellbar sind unabhängig von der Größe der Verlagerung des einzelnen Objektpunktes (7).

9. Verfahren nach einem der vorhergehenden Ansprüche,
**dadurch gekennzeichnet, daß**
die Punktverfolgung gemäß Anspruch 8 für eine Vielzahl von Objektpunkten (7), insbesondere allen ermittelten Prüfpunkten (7), durchgeführt wird.

10. Verfahren nach einem der vorhergehenden Ansprüche,
**dadurch gekennzeichnet, daß**
für alle ermittelten Prüfpunkte (7) die zwischen den unterschiedlichen Belastungszuständen liegenden Spannungsdifferenzen und daraus resultierenden Dehnungen hinsichtlich Betrag und Richtung ermittelt werden.

11. Verfahren nach einem der vorhergehenden Ansprüche,
**dadurch gekennzeichnet, daß**
mittels des optischen, flächenhaft arbeitenden Meßverfahrens nicht nur die Verlagerung der Objektpunkte (7), sondern auch die Form der Oberfläche (1a) des Werkstückes (1) im Prüfbereich (2) bestimmt wird, insbesondere im gleichen Meßdurchgang bestimmt wird.
